Europäisches Patentamt

European Patent Office

Office européen des brevets

(19)

(11) Veröffentlichungsnummer: **0 222 024**

**B1**

(12) **EUROPÄISCHE PATENTSCHRIFT**

(45) Veröffentlichungstag der Patentschrift:
31.05.89

(21) Anmeldenummer: 85111094.0

(22) Anmeldetag: 03.09.85

(51) Int. Cl.⁴: **B 01 D 46/52**

ERRATUM

(SEITE, SPALTE, ZEILE)
(PAGE, COLUMN, LINE)
(PAGE, COLONNE, LIGNE)

| DIE TEXTSTELLE:<br>TEXT PUBLISHED:<br>LE PASSAGE SUIVANT: | | | | LAUTET BERICHTIGT:<br>SHOULD READ:<br>DEVRAIT ETRE LU: |
|---|---|---|---|---|
| Anspruch 1 oder 2, dadurch | 4 | 5 | 7 | Anspruch 1, dadurch |
| Anspruch 1, 2 oder 3, | 4 | 5 | 11 | Anspruch 1 oder 2, |
| Anspruch 4, dadurch | 4 | 5 | 15 | Anspruch 3, dadurch |
| Ansprüche 3 bis 5, dadurch | 4 | 5 | 20/21 | Ansprüche 2 bis 4, dadurch |

Tag der Entscheidung ) 
über die Berichtigung ) 21.11.89
Date of decision on )
rectification: ) . . . . . . . . . . . . . . . . . . .
Date de décision portant )

Ausgabe- und Ver- )
öffentlichungstag: ) 7.2.90
Issue and publication )
date: ) . . . . . . . . . . . . . . . . .
Date d'edition et de )
publication: )

Patbl.Nr.) 90/06
EPB no:) . . . . . . . .
Bull. no:)

**Europäisches Patentamt**

**European Patent Office**

**Office européen des brevets**

(19)

(11) Veröffentlichungsnummer: **0 222 024**

**B1**

(12) **EUROPÄISCHE PATENTSCHRIFT**

(45) Veröffentlichungstag der Patentschrift:
**31.05.89**

(51) Int. Cl.⁴: **B 01 D 46/52**

(21) Anmeldenummer: **85111094.0**

(22) Anmeldetag: **03.09.85**

(54) **Einrichtung zum Befestigen von Filterpatronen in Staubfiltern.**

(30) Priorität: **02.08.85 DE 3527766**

(43) Veröffentlichungstag der Anmeldung:
**20.05.87 Patentblatt 87/21**

(45) Bekanntmachung des Hinweises auf die Patenterteilung:
**31.05.89 Patentblatt 89/22**

(84) Benannte Vertragsstaaten:
**AT BE CH DE FR GB IT LI NL SE**

(56) Entgegenhaltungen:
**DE-U-8 437 002**
**US-A-4 482 367**

(73) Patentinhaber: **Intensiv- Filter GmbH & Co KG,
Vosskuhlstrasse 63, D-5620 Velbert 11 (DE)**

(72) Erfinder: **Kordas, Friedel, Landschützstrasse 20b,
D-4350 Recklinghausen- Süd (DE)**

(74) Vertreter: **Geiersbach, Walter, Dipl.- Ing.,
Wickrather Strasse 43, D-4000 Düsseldorf 11 (DE)**

## Beschreibung

Die Erfindung betrifft eine Einrichtung zum Befestigen von Filterpatronen in einem Staubfilter, das durch eine Trennplatte in einen Staubgas- und einen Reingasraum unterteilt ist. Im Staubgasraum unter der Trennplatte sind Filterpatronen angebracht, die in der Filtrierphase von der zu reinigenden Gas von außen nach innen durchströmt und von der an ihrer äußeren Oberfläche haftenden Staubschicht befreibar sind.

Filterpatronen sind Filterelemente, die aus sternförmig gefaltetem und kreisringförmig zusammengesetztem Filtermaterial bestehen. An ihren oberen Ende haben sie einen offenen, mit einer Dichtung versehenen Deckel. An ihrem unteren Ende haben sie einen geschlossenen Deckel, in dem sich ein Loch für die Aufnahme einer Befestigungseinrichtung befindet.

Diese Filterpatronen werden in bekannter Weise mit Sechskant-, Flügel- oder Knebelmuttern gegen die Trennplatte gespannt. Die Muttern werden auf das Gewinde am Ende einer mit der Trennplatte fest verbundenen Befestigungsstange oder eines Befestigungsbügels nach dem Prinzip einer einfachen Schraubverbindung aufgeschraubt. Dabei wird mit Hilfe der auf dem oberen Deckel der Filterpatrone angeordneten Dichtung die für eine einwandfreie Funktion des Filters erforderliche staubdichte Verbindung zwischen Filterpatrone und Trennplatte erreicht.

Diese Befestigungseinrichtungen haben sich bei der Befestigung von Filterpatronen im allgemeinen gut bewährt. Bei ihrem Einsatz in Staubfiltern weisen sie jedoch gravierende Mängel auf.

Patronenfilter werden teilweise als komplette Filter mit Staubaustrags- und Staubabzugseinrichtung ausgebildet. Häufig werden sie wegen der dem Patronenfilter eigenen, sehr kompakten Bauweise als Aufsatzfilter direkt auf Produktionsmaschinen oder auf Bunker und Silos aufgebaut. Bei allen Filtern ist das Filterelement, in diesem Fall die Filterpatrone, ein Verschleißteil, das von Zeit zu Zeit infolge Verschleiß, Zusetzen oder anderer Umstände, wie Feuchtigkeit, Temperatur oder chemischem Angriff, unbrauchbar wird und deshalb ausgewechselt werden muß. Dieses Auswechseln wird aus Kostengründen in der Regel nicht von Fachkräften, sondern von angelerntem Hilfspersonal durchgeführt. Hierfür ist eine klare, einfache und sicher funktionierende Handhabung erwünscht.

Beim Auswechseln der Filterpatronen mit den bekannten Befestigungseinrichtungen müssen die Filterpatronen über die Befestigungsstangen oder Befestigungsbügel geschoben, das Durchstteckloch im Patronendeckel gesucht, die Patrone festgehalten und die Befestigungsmuttern auf das Gewinde am Ende der Befestigungseinrichtung geschraubt werden. Hierbei fallen dem Wartungspersonal die Befestigungsmuttern oft aus der Hand. In einigen Fällen ist es durchaus möglich, diese Teile nach mühevoller Arbeit wieder aus dem Staub herauszuholen. In den meisten Fällen ist dies jedoch nicht möglich, besonders dann, wenn die Filter auf Produktionsmaschinen, Bunkern oder Silos aufgebaut sind. Fremdteile im Staub oder im Produkt können jedoch wertvolle, für die Staub- und Produktförderung erforderliche Anlagenteile blockieren oder beschädigen. Werden Fremdteile nicht wieder gefunden, kann es sein, daß das Produkt verworfen werden muß. Dies ist jedoch aus Kostengründen selbst bei einfachen Produkten nicht tragbar und bei wertvollen Produkten unmöglich.

Der Erfindung liegt die Aufgabe zugrunde, eine Einrichtung zum Befestigen von Filterpatronen in Staubfiltern der eingangs genannten Art so auszubilden, daß lose Teile beim Ein- und Ausbau der Filterpatronen nicht herabfallen können.

Diese Aufgabe wird mit der Erfindung dadurch gelöst, daß jede Filterpatrone an einem mit der Trennplatte lösbar verbundenen Befestigungsbügel befestigt ist, der über das an seinem unteren Ende befindliche Befestigungsgewinde hinaus durch einen Schaft verlängert ist, der an seinem freien Ende mit einem Sicherungsgewinde versehen ist und dessen Durchmesser geringfügig kleiner ist als der Kerndurchmesser der beiden Gewinde.

Der mit der Erfindung erzielbare technische Fortschritt beruht auf folgenden vorteilhaften technischen Wirkungen. Die Filterpatronen lassen sich von angelerntem Hilfspersonal klar, einfach und sicher handhaben. Befestigungsmuttern können den Wartungspersonal nicht mehr aus der Hand fallen und brauchen deshalb nicht mehr gesucht zu werden. Fremdteile im Staub oder Produkt kommen nicht mehr vor und können deshalb wertvolle Anlagenteile für die Staub- oder Produktförderung nicht mehr blockieren oder beschädigen. Produkte brauchen nicht mehr verworfen zu werden.

Um bei der Handhabung der Filterpatronen Fehler auszuschliessen, weist der Befestigungsbügel zwei elastisch spreizbare Schenkel auf.

Um die Befestigung der Filterpatrone narrensicher zu gestalten, ist der Befestigungsbügel mittels Haken mit der Trennplatte lösbar verbunden. Vorteilhaft sind die Haken an der Trennplatte befestigt und seitlich in die Enden der Schenkel des Befestigungsbügels einrastbar.

Vorgaben an das Montage- oder Wartungspersonal über die erforderliche Höhe der Anpreßkraft sind nicht mehr notwendig, wenn die Länge der Schenkel auf den staubdichten Sitz der Filterpatrone genau abgestimmt ist.

Die Erfindung ist in der Zeichnung an einem Ausführungsbeispiel veranschaulicht. Es zeigt:

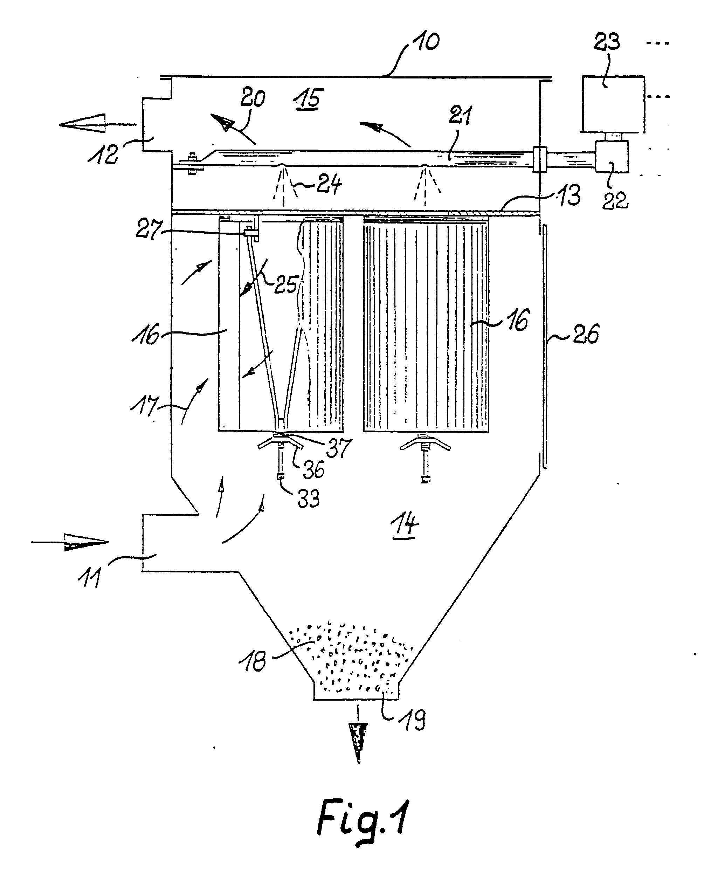

Fig. 1  ein komplettes Filter im Querschnitt und

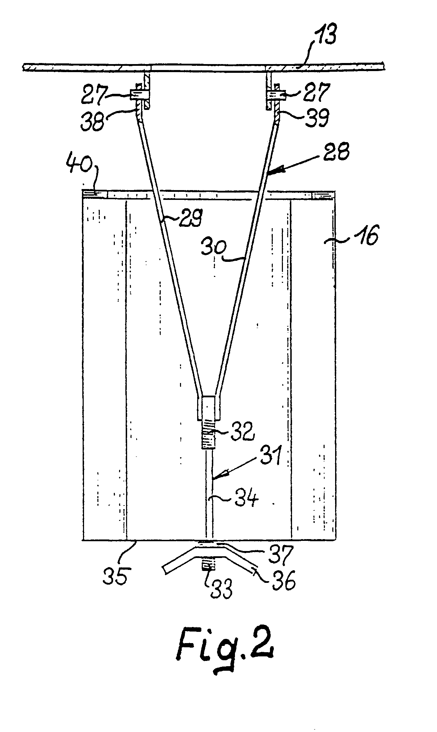

Fig. 2   die Befestigungseinrichtung für die Filterpatrone in größerem Maßstab.

Das Filter besteht aus einem Gehäuse 10 mit einem Einlaß 11 für das Staubgas und einem Auslaß 12 für das Reingas. Eine Trennplatte 13 teilt das Gehäuse 10 in einen Staubgasraum 14 und einen Reingasraum 15. Unter der Trennplatte 13 sind Filterpatronen 16 hängend angebracht.

Das zu reinigende Staubgasgemisch gelangt durch den Einlaß 11 in den Staubgasraum 14 und strömt in der Filtrierphase 17 von außen nach innen durch die Filterpatronen 16. Der von den Filterpatronen 16 abgereinigte Staub 18 wird durch die Staubaustragsöffnung 19 ausgetragen. Das Reingas 20 verläßt den Reingasraum 15 das Filters durch den Auslaß 12.

Zum Abreinigen der Filterpatronen 16 ist im Ausführungsbeispiel eine Abreingungsvorrichtung mit Druckluft vorgesehen, von der nur die wesentlichen, unbedingt erforderlichen Teile dargestellt sind. Die Abreinigungsvorrichtung besteht aus einer Blaseinrichtung 21, einem Ventil 22 und einem Druckluftspeicher 23. Zum Abreinigen der Filterpatronen 16 tritt Druckluft aus der Blaseinrichtung 21 in Form von Blasstrahlen 24 aus, dringt in die Filterpatronen 16 ein und sprengt in der Abreinigungsphase 25 die an der Außenfläche der Filterpatronen haftende Staubschicht ab. Über eine Bedienungstüre 26 ist das Filter zum Ein- und Ausbau der Filterpatronen 16 zugänglich.

Die Filterpatronen 16 sind an Haken 27 der Trennplatte 13 aufgehängt mittels Befestigungsbügel 28, deren Schenkel 29, 30 elastisch spreizbar sind. Die Haken 27 sind seitlich in die Enden der Schenkel 29, 30 des Befestigungsbügels 28 einrastbar. Die Schenkel 29, 30 der Befestigungsbügel 28 laufen zusammen und sind befestigt an einem zweistufigen Gewindezapfen 31 mit einem Befestigungsgewinde 32 und einem Sicherungsgewinde 33. Die Gewinde 32 und 33 des Gewindezapfens 31 sind durch einen Schaft 34 miteinander verbunden, dessen Durchmesser geringfügig kleiner ist als der Kerndurchmesser der beiden Gewinde 32 und 33.

Zum Einbau einer Filterpatrone 16 wird der Befestigungsbügel 28 außerhalb des Filters mit dem zweistufigen Gewindezapfen 31 in das Durchsteckloch des unteren Patronendeckels 35 eingeführt. Dabei ist das Suchen des Durchstecklochs mit dem Gewindezapfen 31 des Befestigungsbügels 28 wegen des guten Einblicks in die Filterpatrone 16 denkbar einfach. Anschließend wird eine Befestigungsmutter 36 zusammen mit einer Dichtung 37 über das Sicherungsgewinde 33 des zweistufigen Gewindezapfens 31 hinweggeschraubt. Die erfindungsgemäße Ausbildung der Befestigungseinrichtung erlaubt es, den Befestigungsbügel 28 soweit aus der Filterpatrone 16 herauszuziehen, daß die Filterpatrone an dem aus ihr herausragenden Ende gehandhabt und in das Filtergehäuse 10 hineingebracht werden kann. An Ort und Stelle kann der Befestigungsbügel 28 in die Haken 27 eingerastet werden. Die Filterpatrone 16 wird gegen die Trennplatte 13 geschoben und mittels der Befestigungsmutter 36 auf dem Befestigungsgewinde 32 gegen die Trennplatte 13 gepreßt und damit staubdicht befestigt.

Auf Grund der erfindungsgemäßen Gestaltung des Befestigungsbügels 28 kann die Filterpatrone 16 mit ihrem unteren Deckel 35 nur bis zu den als Anschlag dienenden Enden 38, 39 der an dem Gewindezapfen 31 angebrachten Schenkel 29, 30 des Befestigungsbügels 28 angepreßt werden. Dar Abstand von diesem Anschlag bis zur Trennplatte 13 ist so bemessen, daß eine auf dem oberen Deckel der Filterpatrone 16 angebrachte Dichtung 40 die richtige, für eine absolute Staubdichtheit erforderliche Eindrücktiefe erfährt, wenn die Filterpatrone 16 mittels der Befestigungsmutter 36 fest gegen den Anschlag geschraubt wird. Es ist deshalb nicht erforderlich, dem Montage- oder Wartungspersonal irgendwelche Vorgaben über die erforderliche Höhe der Anpreßkraft zu machen.

Zum Ausbau der Filterpatronen 16 wird die Befestigungsmutter 36 von dem Befestigungsgewinde 32 des Gewindezapfens 31 abgeschraubt. Mutter und Patrone fallen nach unten. Die Mutter kann nur bis zu dem Anfang des Sicherungsgewindes 33 fallen und wird von diesem daran gehindert, ganz herabzufallen. Die Filterpatrone 16 wird an den aus ihr herausragenden Teil des Befestigungsbügels 28 aus den Filtergehäuse 10 herausgehoben und an einen sicheren Ort gebracht. Hier wird die Befestigungsmutter 36 über das Sicherungsgewinde 33 hinweg geschraubt. Der Befestigungsbügel 28 wird aus der Patrone 16 herausgezogen und in eine neue Filterpatrone hineingesteckt.

**Patentansprüche**

1. Einrichtung zum Befestigen von Filterpatronen in einem Staubfilter, das durch eine Trennplatte (13) in einen Staubgas- und einen Reingasraum (14 bzw. 15) unterteilt ist, mit im Staubgasraum (14) unter der Trennplatte (13) angeordneten Filterpatronen (16), die in der Filtrierphase von dem zu reinigenden Gas von außen nach innen durchströmt und in der Abreinigungsphase von der an ihrer äußeren Oberfläche haftenden Staubschicht befreibar sind und die mittels je eines in ein im unteren Patronendeckel (35) befindliches Durchsteckloch eingeführten Befestigungsbügels (28), der an seinem unteren Ende mit einem Befestigungsgewinde (32) versehen ist, an der Trennplatte (13) angebracht sind, dadurch gekennzeichnet, daß der Befestigungsbügel (28) mit der Trennplatte (13) lösbar verbunden und über das Befestigungsgewinde (32) hinaus durch einen Schaft (34) verlängert ist, der an seinem freien Ende mit einen Sicherungsgewinde (33) versehen ist und dessen Durchmesser geringfügig kleiner ist als der Kerndurchmesser beider Gewinde (32 und 34).

2. Einrichtung nach Anspruch 1 oder 2, dadurch gekennzeichnet, daß der Befestigungsbügel (28) zwei elastisch spreizbare Schenkel (29, 30) aufweist.

3. Einrichtung nach Anspruch 1, 2 oder 3, dadurch gekennzeichnet, daß der Befestigungsbügel (28) mittels Haken (27) mit der Trennplatte (13) lösbar verbunden ist.

4. Einrichtung nach Anspruch 4, dadurch gekennzeichnet, daß die Haken (27) an der Trennplatte (13) befestigt sind und seitlich in die Enden (38, 39) der Schenekel (29, 30) des Befestigungsbügels (28) einrastbar sind.

5. Einrichtung nach einem der Ansprüche 3 bis 5, dadurch gekennzeichnet, daß die Länge der Schenkel (29, 30) auf den staubdichten Sitz der Filterpatrone (16) genau abgestimmt ist.

## Claims

1. Apparatus for securing filter cartridges in a dust filter which is divided by means of a separating plate (13) into a dusty-gas space (14) and a clean-gas space (15) and has, arranged in the dusty-gas space (14) below the separating plate (13), filter cartridges (16) which in the filtering phase are streamed through from the outside towards the inside by the gas to be cleaned and which in the cleaning-off phase can be freed from the layer of dust adhering to their outer surface, and which are held against the separating plate (13) by means of a respective securing bracket (28) which is introduced into a through hole located in the lower cartridge cover (35) and which is provided at its lower end with a securing thread (32), characterized in that the securing bracket (28) is detachably connected to the separating plate (13) and is extended beyond the securing thread (32) by a shaft (34) which is provided at its free end with a securing thread (33) and whose diameter is slightly smaller than the root diameter of both threads (32 and 34).

2. Apparatus according to Claim 1, characterized in that the securing bracket (28) has two resiliently separable legs (29, 30).

3. Apparatus according to Claim 1.or 2, characterized in that the securing bracket (28) is detachably connected to the separating plate (13) by means of hooks (27).

4. Apparatus according to Claim 3, characterized in that the hooks (27) are secured to the separating plate (13) and are latchable laterally into the ends (38, 39) of the legs (29, 30) of the securing bracket (28).

5. Apparatus according to one of Claims 2 to 4, characterized in that the length of the legs (29, 30) is precisely matched to the dust-tight seat of the filter cartridge (16).

## Revendications

1. Dispositif pour fixer les cartouches de filtre dans un filtre à poussières qui est subdivisé par une plaque de séparation (13) en une enceinte de gaz chargé de poussière et une enceinte de gaz épuré (14, 15), avec des cartouches de filtre (16) disposées dans l'enceinte de gaz chargé de poussière (14), sous la plaque de séparation (13), qui sont parcourures de l'extérieur vers l'intérieur dans la phase de filtration par le gaz à nettoyer et qui sont susceptibles d'être nettoyées de la couche de poussière adhérant à leur surface extérieure dans la phase de nettoyage, cartouches qui sont montées sur la plaque de séparation (13) chaque fois au moyen d'un étrier de fixation (28) comportant à son extrémité inférieure un filetage de fixation (32) et introduit dans un trou de passage se trouvant dans le couvercle de cartouche (35) inférieur, caractérisé en ce que l'étrier de fixation (28) avec la plaque de séparation (13) sont reliés de manière démontable et prolongés au-dessus du filetage de fixation (32) par une tige (34) qui présente un filetage de sécurité (33) à son extrémité libre et dont le diamètre est très légèrement plus petit que le diamètre primitif des deux filetages (32 et 34).

2. Dispositif selon la revendication 1, caractérisé en ce que l'étrier de fixation (28) présente deux ailes (29, 30) élastiques susceptibles d'être écartées.

3. Dispositif selon la revendication 1 ou 2, caractérisé en ce que l'étrier de fixation (28) est relié de manière démontable à la plaque de séparation (13) au moyen de crochets (27).

4. Dispositif selon la revendication 3 caractérisé en ce que les crochets (27) sont fixés sur la plaque de séparation (13) et susceptibles de s'engager latéralement dans les extrémités (38, 39) des ailes (29, 30) de l'étrier de fixation (28).

5. Dispositif selon l'une quelconque des revendications 2 à 4, caractérisé en ce que la longueur des ailes (29, 30) est adaptée précisément au siège étanche à la poussière de la cartouche de filtre (16).

Fig.1

Fig.2